# EUROPEAN PATENT APPLICATION

(11) **EP 3 007 119 A1**
(43) Date of publication of application: **13.04.2016**
(21) Application number: 15186948.4
(22) Date of filing: 25.09.2015
(51) Int. Cl.: G06Q 10/10

(54) **METHOD AND ELECTRONIC DEVICE FOR DISPLAYING TIME**

(30) Priority: 10.10.2014 KR 20140136430
(71) Applicant: Samsung Electronics Co., Ltd., Gyeonggi-do 16677 (KR)
(72) Inventor: SHIN, Ho Kuen, Gyeonggi-do 16504 (KR); KIM, Joon Woo, Gyeonggi-do 16543 (KR)
(74) Representative: Grootscholten, Johannes A.M.

(57) **Abstract**

A method and an electronic device are provided for displaying time information corresponding a location where an external electronic device is located. The electronic device obtains the time information of the external electronic device. The electronic device displays the time information and contact information corresponding to the external electronic device in response to a request.

## Description

### BACKGROUND OF THE INVENTION

### 1. Field of the Invention

The present disclosure relates generally to the display of an electronic device, and more particularly, to a function for displaying the time in an area where another user is located.

### 2. Background of the Invention

Generally, a conventional electronic device may obtain profile information (e.g., a user name, a user phone number, a user address, and the like) of a user of an external electronic device through a contact information function. Moreover, the conventional electronic device may obtain location information (e.g., a country name, a city name, and the like) that is included in the profile information.

Since a conventional time information display function depends on information that is manually inputted by a user, precise time information may not be provided. For example, when an external electronic device is located in a country or a city that is not expected by a user, the conventional time information display function may provide false information that is not based on a real, current or momentary location of an external electronic device. Moreover, the conventional time information display function may provide information through a screen, in which a country name or a city name is inputted, thereby making it difficult to check intuitive information.

### SUMMARY OF THE INVENTION

The present disclosure has been made to address at least the above problems and/or disadvantages and to provide at least the advantages described below. Accordingly, an aspect of the present disclosure provides a method and electronic device for intuitively displaying the time in an area where another user is located.

Another aspect of the present disclosure provides a method and an electronic device capable of collecting time information of a location, where an external electronic device is located, through a location confirm request.

Yet another aspect of the present disclosure provides a method and an electronic device capable of collecting and displaying location information of an external electronic device.

In accordance with an aspect of the present disclosure, an electronic device is provided that includes an information processing module configured to control a display to display contact information and time information corresponding to an external electronic device, in response to a request. The electronic device also includes the display configured to display the contact information and the time information.

In accordance with another aspect of the present disclosure, a method is provided for displaying time information corresponding a location where an external electronic device is located. An electronic device obtains the time information of the external electronic device. The electronic device displays the time information and contact information corresponding to the external electronic device in response to a request.

A non-transitory computer readable medium is provided with computer executable instructions stored thereon executed by a processor to perform the method of displaying time information corresponding a location where an external electronic device is located. The method includes obtaining the time information of the external electronic device. The method also includes displaying the time information and contact information corresponding to the external electronic device in response to a request.

### BRIEF DESCRIPTION OF THE DRAWINGS

The above and other aspects, features, and advantages of embodiments of the present disclosure will be more apparent from the following description when taken in conjunction with the accompanying drawings, in which:
FIG. 1 is a diagram illustrating an electronic device configuration and an operating environment, according to various embodiments of the present disclosure;
FIG. 2 is diagram illustrating an information processing module, according to an embodiment of the present disclosure;
FIG. 3 is a flowchart illustrating a method of operating an electronic device related to an information processing module, according to an embodiment of the present disclosure;
FIG. 4 is a flowchart illustrating a method of operating an electronic device related to a direct communication method, according to an embodiment of the present disclosure;
FIG. 5 is a flowchart illustrating a method of operating an electronic device related to a communication method between electronic devices, according to an embodiment of the present disclosure;
FIG. 6 is a flowchart illustrating a method of operating an electronic device related to an information use method, according to an embodiment of the present disclosure;
FIG. 7 illustrates a time table, according to an embodiment of the present disclosure;
FIG. 8 is a diagram illustrating a list information display screen, according to an embodiment of the present disclosure;
FIG. 9 is a diagram illustrating a list information display screen and an item information display screen, according to an embodiment of the present disclosure;
FIG. 10 is a diagram illustrating a message writing screen, according to an embodiment of the present disclosure;
FIG. 11 is a diagram illustrating a chat function screen, according to an embodiment of the present disclosure;
FIG. 12 is a diagram illustrating a screen associated with an information use method, according to an embodiment of the present disclosure;
FIG. 13 is a block diagram illustrating an electronic device, according to an embodiment of the present disclosure;
FIG. 14 is a block diagram illustrating of a program module, according to an embodiment of the present disclosure;

### DETAILED DESCRIPTION OF EMBODIMENTS OF THE PRESENT INVENTION

Embodiments of the present disclosure are described in detail with reference to accompanying drawings. The same or similar components may be designated by the same or similar reference numerals. Detailed descriptions of constructions or processes known in the art may be omitted to avoid obscuring the subject matter of the present disclosure.

As described herein, the expressions "have", "may have", "include", "comprise", "may include", and "may comprise" indicate the existence of corresponding features (e.g., elements such as numeric values, functions, operations, or components) but do not exclude presence of additional features.

As described herein, the expressions "A or B", "at least one of A and B", and "one or more of A and B", and the like include any and all combinations of one or more of the associated listed items. For example, the expressions "A or B", "at least one of A and B", and "at least one of A and B" may refer to: (1) where at least A is included, (2) where at least B is included, or (3) where both of A and B are included.

Terms such as "first", "second", and the like, as used herein, may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. Additionally, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it can be directly coupled with/to or directly connected to the other element, or an intervening element (e.g., a third element) may be present. In contrast, when an element (e.g., the first element) is referred to as being "directly coupled with/to" or "directly connected to" another element (e.g., the second element), it should be understood that there is no intervening element (e.g., the third element).

The expression "configured to", as used herein, may be used as, for example, the expression "suitable for", "having the capacity to", "designed to", "adapted to", "made to", or "capable of". The term "configured to" does not only mean "specifically designed to" in hardware. Instead, the expression "a device configured to" may mean that the device is "capable of" operating together with another device or other components. For example, a "processor configured to perform A, B, and C" may mean a dedicated processor (e.g., an embedded processor) for performing a corresponding operation, or a generic-purpose processor (e.g., a central processing unit (CPU) or an application processor) that may perform corresponding operations by executing one or more software programs which are stored in a memory device.

Terms used herein are used to describe specified embodiments of the present disclosure and are not intended to limit the scope of the present disclosure. The terms used in a singular form may also include plural forms unless otherwise specified. Unless otherwise defined herein, all the terms used herein, which include technical or scientific terms, may have the same meanings that are generally understood by a person skilled in the art. It will be further understood that terms, which are defined in a dictionary and commonly used, should be interpreted as is customary in the relevant related art and not in an idealized or overly formal manner, unless expressly so defined herein. In some cases, even if terms are defined in the specification, they may not be interpreted to exclude embodiments of the present disclosure.

An electronic device, according to an embodiment of the present disclosure may be embodied as at least one of a smartphone, a tablet personal computer (PC), a mobile phone, a video telephone, an electronic book reader, a desktop PC, a laptop PC, a netbook computer, a workstation, a server, a personal digital assistant (PDA), a portable multimedia player (PMPs), a Motion Picture Experts Group (MPEG-1 or MPEG-2) Audio Layer 3 (MP3) player, a mobile medical device, a camera, a wearable device (e.g., head-mounted-devices (HMDs), such as electronic glasses), electronic apparel, an electronic bracelet, an electronic necklace, an electronic appcessory, an electronic tattoo, a smart watch, and the like.

According to an embodiment of the present disclosure, the electronic device may be embodied as a smart home appliance. The smart home appliance may include at least one of, for example, a television (TV), a digital versatile disc (DVD) player, an audio player, a refrigerator, an air conditioner, a cleaner, an oven, a microwave oven, a washing machine, an air cleaner, a set-top box, a TV box, a game console, an electronic dictionary, an electronic key, a camcorder, an electronic picture frame, and the like.

According to an embodiment of the present disclosure, the electronic device may be embodied as at least one of a medical device (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), a scanner, and an ultrasonic device), a navigation device, a global positioning system (GPS) receiver, an event data recorder (EDR), a flight data recorder (FDR), a vehicle infotainment device, electronic equipment for vessels (e.g., navigation systems and gyrocompasses), avionics, a security device, a head unit for vehicles, an industrial or home robot, an automatic teller machine (ATM), a point of sales (POS), or an internet of things (IoT) (e.g., light bulbs, various sensors, electric or gas meters, sprinkler devices, fire alarms, thermostats, street lamps, toasters, exercise equipment, hot water tanks, heaters, boilers, and the like).

According to an embodiment of the present disclosure, the electronic device may be embodied as at least one of a part of furniture or buildings/structures, an electronic board, an electronic signature receiving device, a projector, or various measuring instruments (e.g., water meters, electricity meters, gas meters, or wave meters, and the like). The electronic device, according to an embodiment of the present disclosure, may be one or more combinations of the above-described devices. According to an embodiment of the present disclosure, an electronic device may be a flexible electronic device. Also, an electronic device, according to an embodiment of the present disclosure, is not limited to the above-described devices, and may include new electronic devices according to the development of technology.

Hereinafter, the term "user" may refer to a person who uses an electronic device or a device (e.g., an artificial intelligence electronic device) that uses an electronic device.

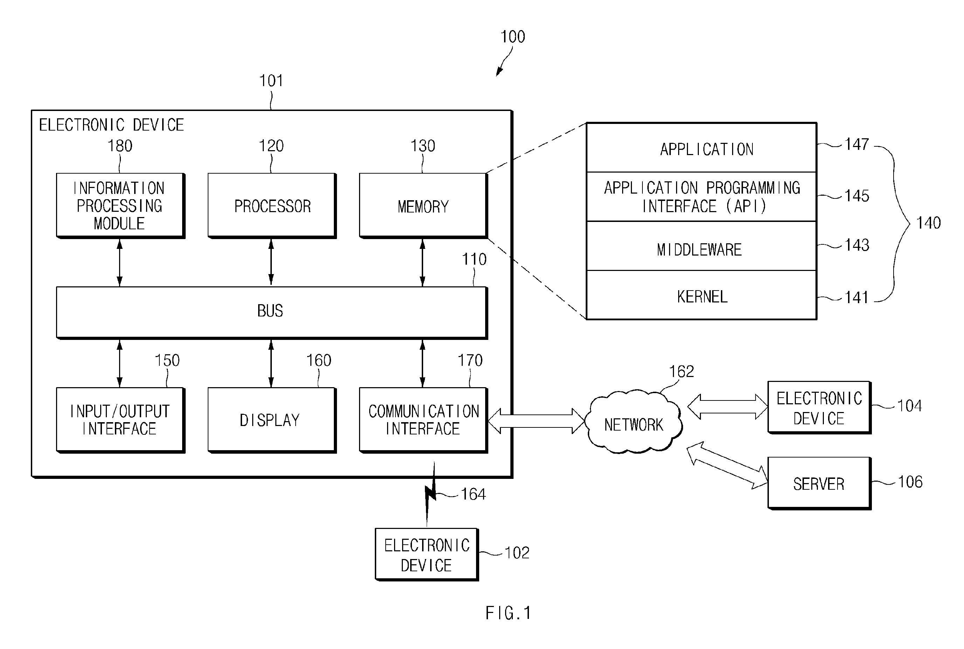

FIG. 1 is a diagram illustrating an electronic device configuration and an operating environment, according to an embodiment of the present disclosure.

Referring to FIG. 1, an electronic device 101 is illustrated in a network environment 100. The electronic device 101 includes a bus 110, a processor 120, a memory 130, an input/output (I/O) interface 150, a display 160, a communication interface 170, and an information processing module 180. According to other embodiments of the present disclosure, the electronic device 101 may omit at least one of the above-described components or may include other component(s).

The bus 110 interconnects the components 110 to 180 and may be a circuit for conveying communications (e.g., a control message and/or data) between the components 110 to 180. According to an embodiment of the present disclosure, the bus 110 may transmit data received through the communication interface 170 to at least one of the processor 120 or the information processing module 180. For example, bus 110 may transmit time information (e.g., time zone and the like) or location information of a location of an external electronic (e.g., a second external electronic device 104), which is received through the communication interface 170, to at least one of the processor 120 or the information processing module 180.

According to an embodiment of the present disclosure, the bus 110 may transmit data processed by the information processing module 180 to the memory 130 or the display 160. For example, the bus 110 may transmit time information (e.g., time zone, current time, date, a day of the week, and the like) or location information (e.g., latitude/longitude, a country name, a city name, geographic features (e.g., a building, a distance, a mountain, or facility), and the like) of a location of an external electronic device, which is processed by the information processing module 180, to the display 160.

The processor 120 may include one or more of a CPU, an application processor (AP), or a communication processor (CP). Moreover, the processor 120 may be implemented to include the information processing module 180, may be implemented to be independent of the information processing module 180, or may be implemented to perform communications based on the bus 110 or to directly perform communications. The processor 120 may perform, for example, data processing or an operation associated with control and/or communication of at least one other component of the electronic device 101.

According to an embodiment of the present disclosure, the processor 120 may support data processing associated with the information processing module 180. For example, the processor 120 may perform an operation and data processing with respect to control and/or communication of the memory 130, or the information processing module 180, and the like, to process at least one of time information or location information of a location of an external electronic device.

The memory 130 may include a volatile and/or nonvolatile memory. For example, the memory 130 may store instructions or data associated with at least one other component of the electronic device 101. According to an embodiment of the present disclosure, the memory 130 may store software and/or a program 140. The memory 130 includes, for example, a kernel 141, a middleware 143, an application programming interface (API) 145, and/or an application (or an application program) 147. At least a portion of the kernel 141, the middleware 143, or the API 145 may be referred to as an "operating system (OS)".

The kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101 so as to control or manage system resources.

The middleware 143 may perform a mediation role such that the API 145 or the application program 147 communicates with the kernel 141 to exchange data.

Furthermore, the middleware 143 may process one or more task request(s) received from the application program 147 based on the priority. For example, the middleware 143 may give the priority, which makes it possible to use a system resource (e.g., the bus 110, the processor 120, the memory 130, or the like) of the electronic device 101, to the application program 147. For example, the middleware 143 may perform scheduling or load balancing on the one or more task request(s), by processing the one or more task request(s) based on the priority given to the at least one task request.

The API 145 may be an interface through which the application program 147 controls a function provided by the kernel 141 or the middleware 143, and may include, for example, at least one interface or function (e.g., an instruction) for file control, window control, image processing, character control, or the like.

According to an embodiment of the present disclosure, the memory 130 may store time information of a location where an external electronic device is located. For example, the memory 130 may store a time zone of the location, and a current time, date, or a day of the week, and the like, which are generated based on the time zone. Alternatively, the memory 130 may store a time table including the time information. The time table may include an identifier (e.g., an identification code, a user name, and the like) of an external electronic device and time information of the location. Furthermore, the time table may further include schedule information of an external electronic device. The schedule information may be information for checking a status of an external electronic device, and may include time-based location information of the external electronic device, contactable time information of the external electronic device, and the like.

According to an embodiment of the present disclosure, the memory 130 may store location information of an external electronic device. For example, the memory 130 may store latitude/longitude of a location where an external electronic device is located, a country name, a city name, and the name of a geographic feature, which are generated based on latitude/longitude, or user profile information of the external electronic device. The user profile information of the external electronic device may include at least one of a user name, a photograph (e.g., an image), a telephone number, an email, or an address. Further, for example, the memory 130 may map location information of an external electronic device into time-based location information of the schedule information and may store the mapped location information in the time table.

According to an embodiment of the present disclosure, the memory 130 may store map data, which is made based on latitude/longitude and is used in a location information display, or time information of an external electronic device.

The I/O interface 150 may transmit an instruction or data, received from a user or another external device, to other component(s) of the electronic device 101. Furthermore, the I/O interface 150 may output an instruction or data, received from other component(s) of the electronic device 101, to a user or another external device. According to an embodiment of the present disclosure, the I/O interface 150 may transmit an instruction or data, received from a user or another external device to at least one of the processor 120 or the information processing module 180.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., text, an image, a video, an icon, a symbol, and the like) to a user. The display 160 may include a touch screen and may receive, for example, a touch, gesture, proximity, or hovering input using an electronic pen or a portion of a user's body.

According to an embodiment of the present disclosure, the display 160 may display time information of a location where an external electronic device is located. According to an embodiment of the present disclosure, the display 160 may display at least one identifier (e.g., a user name) of an external electronic device and time information associated with the at least one identifier. The display 160 may display a current time, a date, a day of the week, and the like, which are generated based on time zone (i.e., Greenwich Mean Time (GMT) or universal time coordinated (UTC)) of the location. The display 160 may display an object (e.g., a text box, an image such as an icon, a button, and the like) corresponding to one or more components of the time information.

According to an embodiment of the present disclosure, the display 160 may display location information of a location of an external electronic device. According to an embodiment of the present disclosure, the display 160 may display a map in which an image indicating latitude/longitude of the location is included. The display 160 may display a country name, a city name, the name of a geographic feature, and the like, which are generated based on latitude/longitude of the location. In this connection, the display 160 may display an object corresponding to one or more components of the location information. Furthermore, the display 160 may display an object in which an object corresponding to one or more components of the location information may be included in an object corresponding to one or more components of the time information as a sub-object.

The communication interface 170 may establish communication between the electronic device 101 and an external electronic device (e.g., a first external electronic device 102, a second external electronic device 104, or a server 106). For example, the communication interface 170 may be connected to a network 162, through wireless communication or wired communication, to communicate with the second external electronic device 104 or the server 106.

The wireless communication may include at least one of, for example, long term evolution (LTE), LTE-advanced (LTE-A), code division multiple access (CDMA), wideband CDMA (WCDMA), universal mobile telecommunications (UMTs), wireless broadband (WiBro), global system for mobile communication (GSM), or the like, as cellular communication protocol. Moreover, the wireless communication may include, for example, a near field communication 164. The near field communication 164 may include, for example, Wi-Fi, Bluetooth, near field communication (NFC), global positioning system (GPS), or the like. The wired communication may include at least one of, for example, a universal serial bus (USB), a high definition multimedia interface (HDMI), a recommended standard-232 (RS-232), or a plain old telephone service (POTS). The network 162 may include at least one of a telecommunications networks, for example, a computer network (e.g., LAN or WAN), the internet, or a telephone network.

Each of the first and second external electronic devices 102 and 104 may be a device that is a different type from that of the electronic device 101. According to an embodiment of the present disclosure, the server 106 may include a group of one or more servers. According to an embodiment of the present disclosure, all or a part of operations that the electronic device 101 will perform may be executed by one or more other electronic devices 102 and 104 and the server 106. According to an embodiment of the present disclosure, when the electronic device 101 executes any function or service automatically, or in response to a request, the electronic device 101 may not perform the function or the service internally, but, alternatively additionally, it may request at least a portion of a function associated with the electronic device 101 at the first or second external electronic device 102 or 104 or the server 106. The other electronic device 102 or 104 or the server 106 may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

According to an embodiment of the present disclosure, the communication interface 170 may communicate with the second external electronic device 104 or the server 106 through the network 162 through a wireless communication or a wired communication. For example, with regard to collection of time information or location information of a location where the second external electronic device 104 is located, the communication interface 170 may communicate with the second external electronic device 104 (e.g., peer to peer (P2P) communication) through the network 162. Furthermore, for example, the communication interface 170 may receive contents (e.g., a text, or an image, and the like) or relevant information, including time information or location information of a location where the second external electronic device 104 is located, by communicating (e.g., client-server communication) with the server 106 connected to the network 162.

The information processing module 180 may execute a function for collecting and processing information of an external electronic device based on an instruction or scheduled data, transmitted from the I/O interface 150, or inputted from a user or an external device. For example, the information processing module 180 may receive a call request of an external electronic device information list (e.g., a contact list (i.e., phone book) or a chat friend list (i.e., buddy)), a scroll request of the external electronic device information list, or a register alarm processing request of contents including location information list, and the like. Moreover, the information processing module 180 may receive a call request of an item (e.g., user profile information of an external electronic device) included in the external electronic device information list, a call request of a short message service (SMS)/multimedia message service (MMS) function, or a call request of a function, associated with a chat room, from among instant message (IM) functions, and the like. Furthermore, the information processing module 180 may receive a location information display screen call request of an external electronic device, or a message (e.g., short message service/multimedia messaging system/instant message (SMS/MMS/IM) or an e-mail, and the like) transmission request, and the like,

According to an embodiment of the present disclosure, the information processing module 180 may collect at least one of time information or location information of a location where the second external electronic device 104 connected through the communication interface 170 is located. The time information may include time zone (e.g., GMT or UTC) information. Moreover, the location information may include GPS information.

According to an embodiment of the present disclosure, the information processing module 180 may display at least one of time information or location information of the location where an external electronic device is located. For example, the information processing module 180 may generate an object corresponding to at least one of information, such as a country name, a city name, a name of geographic feature, and the like, and may transmit the object or an object including one or more objects as a sub-object to the display 160 to display the object. The information of a country name, a city name, or a name of geographic feature may be generated by processing information of current time, date, or a day of the week, or latitude/longitude information. Moreover, the information of current time, date, or a day of the week may be generated by processing time zone information of the location.

Additionally, the information processing module 180 may execute an additional function, such as a reservation message transmission and the like, based on a status of an external electronic device. For example, the information processing module 180 may execute a reservation message transmission function based on contactable time information of schedule information of an external electronic device and time information of a location where the external electronic device is located. Furthermore, the information processing module 180 may check, for example, contactable time information of an external electronic device, based on at least one of time information or location information of the location, and may execute the reservation message transmission function. According to an embodiment of the present disclosure, the information processing module 180 may be included in the processor 120, or may be implemented with an independent module.

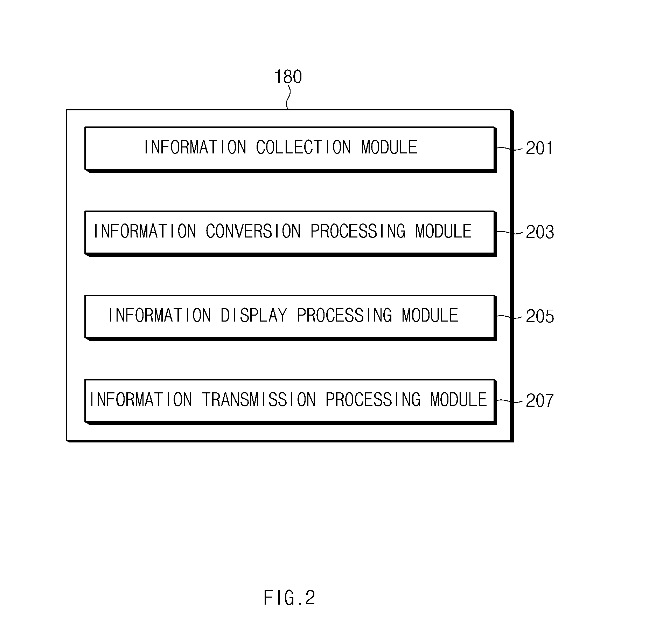

FIG. 2 is a diagram illustrating an information processing module, according to an embodiment of the present disclosure.

Referring to FIG. 2, an information processing module 180, according to an embodiment the present disclosure, includes an information collection module 201, an information conversion processing module 203, an information display processing module 205, and an information transmission processing module 207. According to an embodiment of the present disclosure, when a communication channel with at least one external electronic device is not established (i.e., before a connection), the information processing module 180 controls the display of contact information associated with the external electronic device and time information of the external electronic device. For example, a user of an electronic device 101 may check contact information of an external electronic device to contact with the external electronic device. The information processing module 180 may perform control to display the contact information and the time information of the external electronic device together in response to a display request of the contact information for contacting with the external electronic device. The time information of the external electronic device may be displayed together with the contact information, thereby making it possible for a user of the electronic device 101 to check the time at a location where an external electronic device is located, and to determine whether to contact the external electronic device.

The information collection module 201 may execute functions for collecting and storing time information of a location where an external electronic device is located. According to an embodiment of the present disclosure, if a specific event (e.g., a call request of an external electronic device information list) occurs, the information collection module 201 may collect time information of the second external electronic device 104 through the communication interface 170. In this connection, the information collection module 201 may collect a sharing policy on information provision (hereinafter "information sharing policy") of the second external electronic device 104. The information sharing policy may include (1) a share with all external electronic devices, (2) a share with a specific external electronic device, (3) a share after a user agrees, and (4) no share. The information collection module 201 may collect time information of the second external electronic device 104 based on the information sharing policy.

According to an embodiment of the present disclosure, the information collection module 201 may collect time information of a location, at which an external electronic device is located, stored in a memory 130. For example, when the information collection module 201 does not collect time information from the second external electronic device 104 based on the information sharing policy, the information collection module 201 may collect time information of the second external electronic device 104 stored in a memory 130. The time information of a location, at which an external electronic device is located, stored in a memory 130, may be stored by a manual input method by an operation of a user. Alternatively, the time information of the location, at which an external electronic device is located, stored in a memory 130, may be information previously collected when the information can be shared according to the information sharing policy of the second external electronic device 104. In this connection, the information collection module 201 may extract time information of the location based on an identifier of an external electronic device in the time table stored in the memory 130.

Furthermore, if a specific event (e.g., at least one of a call request of an item included in an external electronic device information list, a call request of a SMS/MMS function, a call request of a function, associated with a chat room, from among IM functions, or a message transmission request) occurs, for example, the information collection module 201 may collect time information of a location where an external electronic device is located, stored in a memory 130. The SMS/MMS function call may include a new message writing window call, a message receiving box call, or a message storage box call, and the like. Further, the function call, associated with a chat room, from among the IM functions may occur in a situation of a chat room open, a designated chat room entrance, or a message transmission.

According to an embodiment of the present disclosure, the information collection module 201 may store, in the memory 130, time information of a location where an external electronic device is located, collected through the communication interface 170. In this operation, the information collection module 201 may compare time information stored in the memory 130 with time information collected through the communication interface 170. If the time information stored in the memory 130 and the time information collected through the communication interface 170 are different, the information collection module 201 may update the time information stored in the memory 130 with the collected time information. For example, when time information of a location where an external electronic device is located is not stored in the memory 130, the information collection module 201 may store the collected time information in the memory 130.

According to an embodiment of the present disclosure, the information collection module 201 may store a collection time of time information of a location, at which an external electronic device is located, collected through the communication interface 170 in the memory 130 to update the collection time. According to an embodiment of the present disclosure, the information collection module 201 may transmit time information of a location, at which an external electronic device is located, to the information conversion processing module 203.

Additionally or generally, the information collection module 201 may execute a function for collection and storage. For example, the information collection module 201 may collect location information of the second external electronic device 104 connected through the communication interface 170. Alternatively, the information collection module 201 may collect location information of an external electronic device, which is stored in the memory 130.

According to an embodiment of the present disclosure, if a specific event (e.g., a register alarm processing request of contents including location information) occurs, the information collection module 201 may receive contents including location information of an external electronic device from the server 106 connected through the communication interface 170. The contents may include at least one of text, a photograph (e.g., an image), a video, or audio data. For example, a photograph (e.g., an image) including location information may include location information (e.g., GPS information and the like) in header information of a photograph file format (e.g., jpeg, png, and the like). Here, the information collection module 201 may extract location information by reading header information of a photograph file including location information and comparing the read header information with a photograph file format defined in advance. Alternatively, the information collection module 201 may extract location information of an external electronic device by analyzing or searching for a geographic feature (e.g., a landmark) in a photograph. For example, a video including location information may include location information in a video frame. Alternatively, the information collection module 201 may extract location information of an external electronic device using a geographic feature (e.g., a landmark) in a video.

According to an embodiment of the present disclosure, the information collection module 201 may store the collected location information of an external electronic device in the memory 130. The information collection module 201 may compare the location information stored in the memory 130 with the collected location information. When the collected location information is different from location information stored in advance, or when there is no stored information, the information collection module 201 may store or update the reception time of the received content in the memory 130.

According to an embodiment of the present disclosure, the information collection module 201 may store time information of a location where an external electronic device is located, using a manual input method in which an input is provided by user manipulation. For example, the information collection module 201 may generate the time information based on address information included in user profile information of an external electronic device inputted by user manipulation, and may store the time information. The information collection module 201 may generate latitude/longitude information corresponding to the address information (e.g., a country name or a city name) using map data drawn based on latitude/longitude. The information collection module 201 may generate time information based on latitude/longitude. According to an embodiment of the present disclosure, the information collection module 201 may transmit location information of an external electronic device to the information conversion processing module 203.

The information conversion processing module 203 may execute a function for converting time information of a location where an external electronic device is located. According to an embodiment of the present disclosure, the information conversion processing module 203 may generate a current time, a date, a day of the week, and the like, of an external electronic device, by converting time zone information (e.g., GMT or UTC, and the like) of the external electronic device. For example, the time zone information of the external electronic device may be UTC-3. Moreover, the time zone information, the current time, the date, and the day of the week may be UTC+9, 09:00, July 30, and Friday, respectively. A correction value (i.e., +9 - (-3) = +12), which is obtained by subtracting a time zone value (i.e., +9) of a user from a time zone value (i.e., - 3) of the external electronic device, may be used to generate the current time of the user. For example, if the correction value is positive, the current time of the external electronic device may follow the current time of a user. For this reason, the information conversion processing module 203 may generate time information corresponding to 21:00, July 29, and Tuesday, which are generated by adding the correction value (e.g., +12) thereto. If the correction value is negative, the time at a location where the external electronic device is located may be ahead of time when the time zone of the user is indicated. According to the embodiment of the present disclosure, the information conversion processing module 203 may transmit the time information to the information display processing module 205.

According to an embodiment of the present disclosure, the information conversion processing module 203 may execute a function for converting location information of an external electronic device. The information conversion processing module 203 may generate a country name, a city name, a name of a geographic feature, and the like, of an external electronic device based on GPS information (or latitude/longitude) of the external electronic device. For example, the information conversion processing module 203 may generate a country name, a city name, a name of a geographic feature, and the like, corresponding to an external electronic device based on map data. According to an embodiment of the present disclosure, the information conversion processing module 203 may transmit location information of an external electronic device to the information display processing module 205.

According to an embodiment of the present disclosure, the information conversion processing module 203 may generate time information based on longitude information of an external electronic device. For example, the information conversion processing module 203 may generate time zone information based on the prime meridian (i.e., longitude 0 degree). The information conversion processing module 203 may set one or more areas, which are not overlapped with each other and belong to a range of 15 degrees with lines, corresponding to a multiple of 15 degrees on a prime meridian basis, as the center. The information conversion processing module 203 may set time zone information corresponding to the one or more areas to a value that sequentially increases by 1 based on the prime meridian. Moreover, in the case where the longitude information is longitude west (i.e., west on the basis of the prime meridian), the information conversion processing module 203 may set time zone information (e.g., GMT or UTC) to a negative value. When the longitude information is longitude east (i.e., east on the basis of the prime meridian), the information conversion processing module 203 may set time zone information to a positive value. According to an embodiment of the present disclosure, when the longitude information is longitude 130 degrees east, the information conversion processing module 203 may set the time zone information to UTC+9.

According to an embodiment of the present disclosure, the information conversion processing module 203 may generate schedule information of an external electronic device based on time information and location information of a location where the external electronic device is located. For example, the information conversion processing module 203 may map location information of the external electronic device to the point corresponding to time information, and may generate the time-based location information of the external electronic device. A time unit which the time-based location information includes may be a unit of a year, a month, a week, a day, an hour, a minute, a second, or the like. Moreover, location information, which the time-based location information includes, may be latitude/longitude, a country, a city, a geographic feature (e.g., a building, a distance, a mountain, or facility), and the like. A time unit, which the time-based location information includes, may be designated by user manipulation. The time-based location information may include information of current time and location information of a specific time interval.

Moreover, for example, the information conversion processing module 203 may generate contactable time information based on the time-based location information of the external electronic device. The contactable time information may be selected in a time range designated based on a mean sunrise/sunset time of a country or a city where the external electronic device is located. The mean sunrise/sunset time may be checked through a specific server (e.g., a server of the meteorological administration). The contactable time information may be generated or adjusted based on current location information of the external electronic device. For example, if the external electronic device is determined to be located in a place (e.g., such as a library) where a telephone conversation is not easy, the information conversion processing module 203 may update the contactable time information with non-contactable time, while the external electronic device stays in a corresponding location. The contactable time information may be converted by user manipulation.

According to an embodiment of the present disclosure, the information conversion processing module 203 may store schedule information of an external electronic device in a time table stored in the memory 130. According to an embodiment of the present disclosure, the information conversion processing module 203 may transmit the schedule information of the external electronic device to the information display processing module 205.

The information display processing module 205 may perform a function for displaying time information of a location where an external electronic device is located. According to an embodiment of the present disclosure, the information display processing module 205 may generate an object corresponding to at least one of a current time, a date, or a day of the week, which is included in the time information, and may transmit the object to the display 160 to display the object. For example, the information display processing module 205 may generate a text box corresponding to at least one of the current time, the date, or the day of the week of the external electronic device, and may transmit the text box to the display 160 to display the text box.

According to an embodiment of the present disclosure, the information display processing module 205 may display at least one of a display location, a shape (or a form), a transparency, or a color of the object based on a collection time of the time information stored in the memory 130. For example, the information display processing module 205 may display at least one of an edge shape or a color of a text box corresponding to the current time, the date, or the day of the week of an external electronic device. Further, for example, the information display processing module 205 may display at least one of a text color, a background color, a background image, or a transparency of the text box, based on a characteristic of the time information.

According to an embodiment of the present disclosure, the information display processing module 205 may execute a function for additionally or generally displaying location information of an external electronic device. According to an embodiment of the present disclosure, the information display processing module 205 may include an image indicating latitude/longitude information of an external electronic device in map data, and may transmit the map data to the display 160 to display the map data.

According to an embodiment of the present disclosure, the information display processing module 205 may execute a function for additionally or generally displaying schedule information of an external electronic device. According to an embodiment of the present disclosure, the information display processing module 205 may generate an object corresponding to one or more components included in time information, location information, or schedule information of a location where an external electronic device is located, and may transmit the object to the display 160 to display the object. For example, the information display processing module 205 may generate a text box corresponding to information of a current time, a date, a day of the week, or a city name of the external electronic device, and may transmit the text box to the display 160 to display the text box.

According to an embodiment of the present disclosure, the information display processing module 205 may generate an object (e.g., an icon (hereinafter "location display icon")) associated with a location information display of an external electronic device. For example, if a location display icon is selected by an input of a user, the information display processing module 205 may display a map in which an image indicating latitude/longitude information of an external electronic device is included. Moreover, for example, the information display processing module 205 may generate an object corresponding to time-based location information of an external electronic device and an object (e.g., text box) in which the location display icon is included, and may transmit the text box to the display 160 to display the text box.

According to an embodiment of the present disclosure, the information display processing module 205 may transmit a reservation message alarm popup to the display 160 to display the reservation message alarm popup. For example, if a message transmission request is issued from an application 147, the information display processing module 205 may transmit a reservation message alarm popup to the display 160 to display the reservation message alarm popup, when time information (e.g., current time of an external electronic device) of an external electronic device is not included in a time range corresponding to contactable time information. Moreover, when time information (e.g., current time of an external electronic device) of an external electronic device is not included in a specific time range (e.g., ordinary life time (or daily work time)), the information display processing module 205 may transmit a reservation message alarm popup to the display 160 to display the reservation message alarm popup. The reservation message alarm popup may include an object of a notice text box, a reservation message registration function button, a message instant transmission function button, or the like. The notice text box may include reservation transmission time information calculated based on time information of an external electronic device and contactable time information.

The information transmission processing module 207 may execute a message processing function associated with the reservation message alarm popup. For example, the information transmission processing module 207 may execute an instant message transmission function, included in the reservation message alarm popup, or a reservation message registration function. For example, the information transmission processing module 207 may transmit reservation message information to an application (e.g., SMS/MMS, a chat application, and the like) associated with a message transmission in response to the reservation message registration function. The reservation message information may include a reservation transmission time calculated based on a reservation message registration event, time information of an external electronic device, and contactable time information. Moreover, for example, the information transmission processing module 207 may transmit a message transmission event to an application associated with a message transmission in response to the instant message transmission function.

According to an embodiment of the present disclosure, if the reservation message registration function or the instant message transmission function is performed with regard to the reservation message alarm popup, the information transmission processing module 207 may transmit an end event of the reservation message alarm popup to at least one of a processor 120 or an information processing module 180 to terminate the reservation message alarm popup.

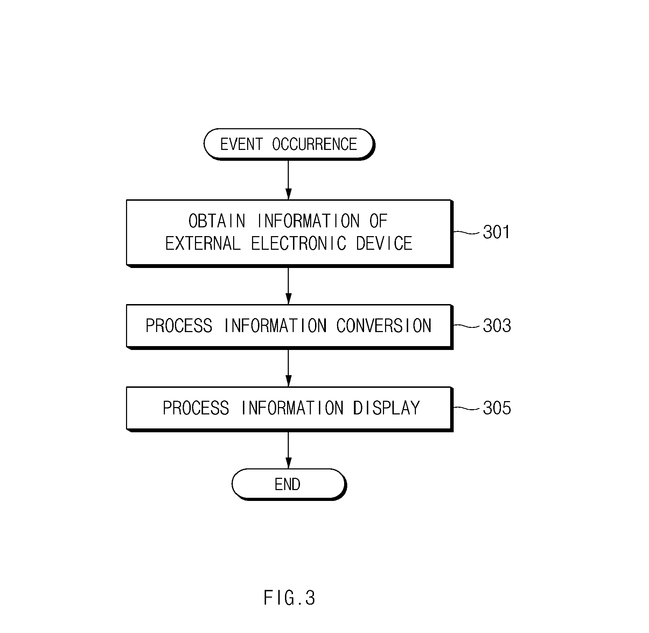

FIG. 3 is a flowchart illustrating a method of operating an electronic device related to an information processing module, according to an embodiment of the present disclosure.

Referring to FIG. 3, an information processing module 180 collects time information of a location where an external electronic device is located, based on an occurrence of a specific event, in operation 301. For example, the event may include at least one of a call request of an information list of the external electronic device, a call request of an item included in the external electronic device information list, a call request of an SMS/MMS function, a call request of a function associated with a chat room, from among IM functions, or a message transmission request. If the event occurs, the information processing module 180 may collect the time information of the location where the external electronic device is located, from the memory 130. Alternatively, the information processing module 180 may request location information or time information of the external electronic device, using the communication interface 170, to collect the location information or the time information, may manage at least one of time information or location information, or may collect time information of the location where the external electronic device is located, from a device for managing contents associated with the external electronic device.

In operation 303, the information processing module 180 converts the time information of the location. According to an embodiment of the present disclosure, the information processing module 180 may generate time information of a current time, a date, a day of the week, and the like, based on time zone information of the external electronic device.

In operation 305, the information processing module 180 displays the time information. According to an embodiment of the present disclosure, the information processing module 180 may generate an object corresponding to one or more components of the time information, and may transmit the object to the display 160 to display the object.

According to an embodiment of the present disclosure, in operation 301, the information processing module 180 may additionally or generally collect location information of the external electronic device based on the occurrence of the specific event. For example, the information processing module 180 may request location information of the external electronic device from the external electronic device or a server device for managing the location information of the external electronic device to collect the location information. Alternatively, the information processing module 180 may collect location information stored in the memory 130 in advance. Alternatively, the information processing module 180 may receive contents including location information of the external electronic device from a specific server, and may extract the location information from the received content.

When location information is collected, in operation 303, the information processing module 180 converts the location information of the external electronic device. According to an embodiment of the present disclosure, the information processing module 180 may generate location information of a country name, a city name, a name of a geographic feature, and the like, based on GPS information (or latitude/longitude information) of the external electronic device. Alternatively, the information processing module 180 may extract location information of a country name, a city name, a name of a geographic feature, and the like, from the received content. Alternatively, the information processing module 180 may generate time information based on location information of the external electronic device. In operation 305, the information processing module 180 may additionally or generally display location information of the external electronic device. For example, the information processing module 180 may display an object corresponding to one or more components included in at least one of the time information or the location information.

According to an embodiment of the present disclosure, if a specific event (e.g., a call request of a contact list (e.g., phone book) or a chat friend list (e.g., buddy), a call request of a SMS/MMS function, a call request of a function associated with a chat room, from among IM functions, or a message transmission request) occurs, the information processing module 180 may receive contents from a server device for managing contents transmitted from the external electronic device. The information processing module 180 may extract location information of the external electronic device based on the received content, and may collect time information of a location where the external electronic device is located, based on the extracted location information. Moreover, the information processing module 180 may convert the collected time information. For example, the information processing module 180 may convert time zone information included in the time information into Information on a current time, a date, or a day of the week. Moreover, for example, the information processing module 180 may display the time zone information or the converted information of a current time, date, or day of the week, based on the time zone information.

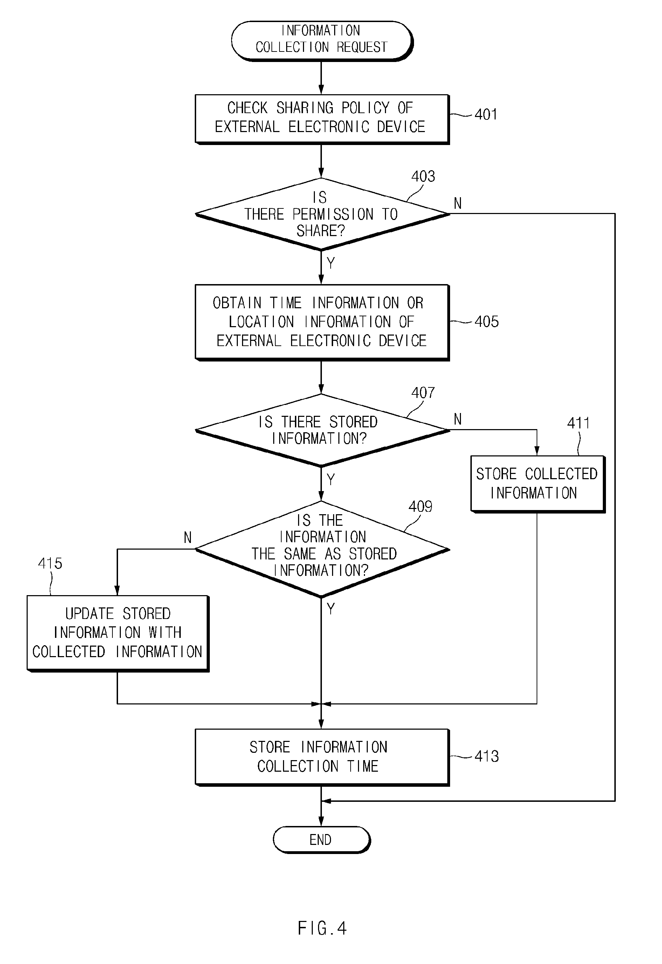

FIG. 4 is a flowchart illustrating a method of operating an electronic device related to a direct communication method, according to an embodiment of the present disclosure.

Referring to FIG. 4, when a specific event (e.g., a call request for an information list of an external electronic device) occurs, the information processing module 180 checks an information sharing policy of an external electronic device. The information sharing policy may include: (1) a policy to share with all external electronic devices, (2) a policy to share with a specific external electronic device, (3) a policy to share after a user agrees; and (4) a policy not to share.

In operation 403, the information processing module 180 determines whether there is permission to share information according to the information sharing policy of the external electronic device. According to an embodiment of the present disclosure, if the information sharing policy is to share with a specific external electronic device (policy (2) above), the information processing module 180 may determine whether the electronic device 101 is the specific external electronic device. Moreover, if the information sharing policy is to share after a user agrees, the information processing module 180 may request the agreement of sharing information from the external electronic device. If it is determined that there is permission to share in operation 403, the information processing module 180 collects time information of a location where the external electronic device is located, in operation 405.

If it is determined that there is not permission to share in operation 403, the methodology terminates. Alternatively, the information processing module 180 may use the time information stored in the memory 130 in advance. When the time information stored in the memory 130 is displayed, the information processing module 180 may provide source information of time information or information on a collection time.

In operation 407, the information processing module 180 determines whether the time information is stored in the memory 130. If the time information is not stored in the memory 130, the information processing module 180 transmits time information collected through communication interface 170 to the memory 130, in order to store the time information, in operation 411. If the time information is stored in the memory 130, the information processing module 180 determines whether the time information stored in the memory 130 is the same as the time information collected through the communication interface 170, in operation 409. When the time information stored in the memory 130 is not the same as the time information collected through the communication interface 170, the information processing module 180 transmits the time information collected through the communication interface 170 to the memory 130, thereby updating the time information, in operation 415.

If it is determined that the time information stored in the memory is the same as the time information collected through the communication interface 170, or after the time information is updated in operation 415, or after the collected information is stored in operation 411, the information processing module 180 transmits a collection time of the time information collected through the communication interface 170 to the memory 130, to store the collection time, in operation 413.

If a specific event (e.g., a call request of an external electronic device information list) occurs, the information processing module 180 may additionally or generally collect and store location information of the external electronic device connected through the communication interface 170. According to an embodiment of the present disclosure, the information processing module 180 may generate the time information based on the collected location information.

According to an embodiment of the present disclosure, the information processing module 180 may perform operation 411 without operations 407, 409, and 415, after collecting at least one of the time information and the location information, in operation 405.

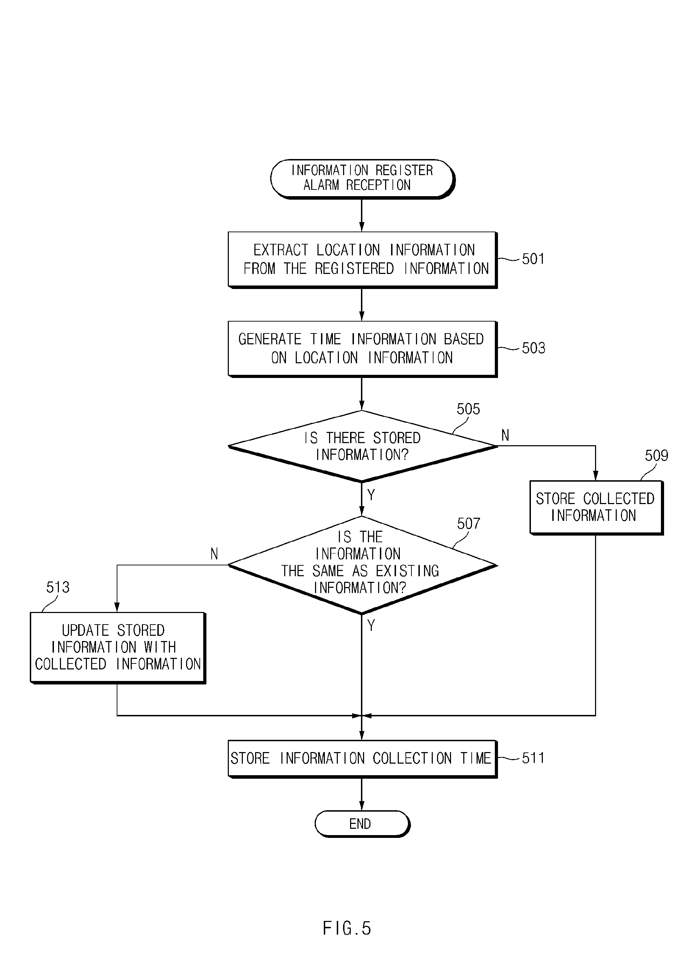

FIG. 5 is a flowchart illustrating a method of operating an electronic device related to a communication method between electronic devices, according to an embodiment of the present disclosure. According to an embodiment of the present disclosure, communication between the electronic devices may include communication between a client and a server.

Referring to FIG. 5, when a specific event (e.g., a register notice processing request for contents including location information) occurs, the information processing module 180 receives contents, including location information of an electronic device (hereinafter "information registration electronic device"), which registers contents, from the server 106 connected through the communication interface 170.

In operation 501, the information processing module 180 extracts location information from contents that include location information of an information registration electronic device. In operation 503, the information processing module 180 generates time information based on the extracted location information (e.g., a country, a city, a geographic feature, and the like). For example, the information processing module 180 may extract longitude information from the extracted location information and may generate time zone information based on the extracted longitude information. According to an embodiment of the present disclosure, the information processing module 180 may generate a current time, a date, a day of the week, and the like, for a location where the external electronic device is located, based on the generated time zone information.

In operation 505, the information processing module 180 determines whether time information, corresponding to a location where the information registration electronic device is located, is stored in the memory 130. When the time information is not stored in the memory 130, the information processing module 180 transmits the time information, which is generated based on location information extracted from contents, to the memory 130 to store the generated time information, in operation 509. When the time information is stored in the memory 130, the information processing module 180 determines whether the time information stored in the memory 130 is the same as the time information generated based on location information extracted from contents, in operation 507. When the time information stored in the memory 130 is not the same as the time information generated based on the location information extracted from the contents, the information processing module 180 transmits the time information generated based on the location information extracted from the contents to the memory 130, thereby making it possible to update the time information, in operation 513.

When it is determined that the time information stored in the memory 130 is the same as the time information generated based on the location information extracted from the contents in operation 507, or after the time information is updated in operation 513, or after the collected information is stored in operation 509, the information processing module 180 transmits a reception time of the contents, which are received from the server 106 connected through the communication interface 170, to the memory 130, to store the reception time, in operation 511. Additionally, the information processing module 180 may transmit the extracted location information to the memory 130 to store the extracted location information at the memory 130.

According to an embodiment of the present disclosure, the information processing module 180 may perform operation 509 without operations 505, 507, and 513, after collecting, in operation 503, the time information for the location where the information registration electronic device is located.

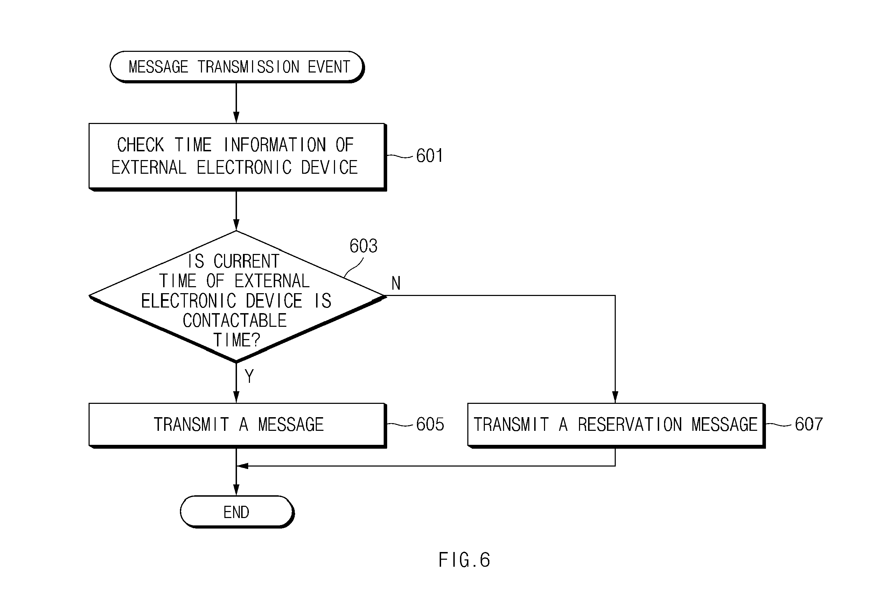

FIG. 6 is a flowchart illustrating a method of operating an electronic device related to an information use method, according to an embodiment of the present disclosure.

Referring to FIG. 6, when an event associated with a message transmission function, such as a SMS/MMS function, provided from the application 147 occurs, the information processing module 180 checks time information of an external electronic device, in operation 601. The information processing module 180 may collect time information of the external electronic device through the communication interface 170, or may collect time information of the external electronic device stored in the memory 130 in advance. According to an embodiment of the present disclosure, the information processing module 180 may check schedule information of the external electronic device based on an identifier of the external electronic device in a time table stored in the memory 130. As described above, the time table may be implemented in a storage form for managing time information by the identifier. The schedule information which is information for checking a status of an external electronic device may also be stored in the time table additionally.

In operation 603, the information processing module 180 determines whether a current time of the external electronic device is a contactable time based on the collected time information and a specific time range. The time range may be designated based on a mean sunrise/sunset time of a country or a city where the external electronic device is located, may be designated based on current location information of the external electronic device, or may be designated by user manipulation. According to an embodiment of the present disclosure, the information processing module 180 may check contactable time information included in schedule information of the external electronic device. When the current time of the external electronic device is a contactable time (or when the current time of the external electronic device is included in a time range corresponding to the contactable time information), the information processing module 180 transmits a message transmission event to a SMS/MMS application, which the application 147 provides, to transmit an instant message, in operation 605. When the current time of the external electronic device is not a contactable time (or when the current time of the external electronic device is not included in the time range corresponding to the contactable time information), the information processing module 180 transmits, in operation 607, a reservation message alarm popup for a reservation message transmission function to the display 160 to display the reservation message alarm popup. Alternatively, the information processing module 180 may automatically generate a reservation message in which a contactable time (or a start time of the time range corresponding to the contactable time information) is set as a message reservation transmission time.

According to an embodiment of the present disclosure, if an event associated with a message transmission function, such as, for example, an SMS/MMS function, provided from the application 147 occurs, the information processing module 180 may collect at least one of time information and location information corresponding to a location where the external electronic device, which is connected through the communication interface 170, is located. The information processing module 180 may convert at least one of the time information and the location information collected to update or store corresponding contents in the time table, and may execute a reservation message transmission function by checking a status of the external electronic device based on the collected information.

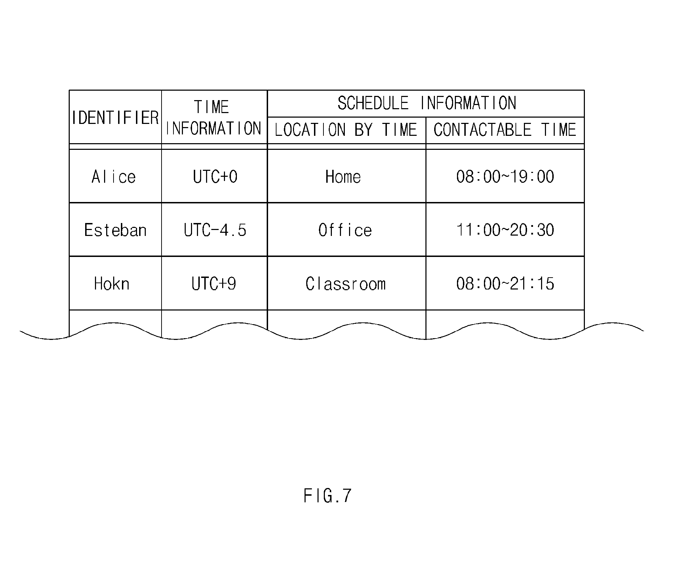

FIG. 7 is a diagram illustrating a time table, according to an embodiment of the present disclosure.

Referring to FIG. 7, the memory 130 may store a time table including information of an external electronic device. According to an embodiment of the present disclosure, the time table includes identifiers and time information of a location, at which an external electronic device is located, mapped by the identifier. The identifier may be an identification code, a user name of an external electronic device, or a telephone number of an external electronic device. Moreover, the time information may be time zone (e.g., GMT or UTC, and the like) information. The time table further includes schedule information including time-based location information of an external electronic device, contactable time information of an external electronic device, and the like.

The time-based location information includes location information of the external electronic device corresponding to a specific time unit. The time unit may be a year, a month, a week, a day, an hour, a minute, a second, and the like. Moreover, location information, which the time-based location information includes, may be latitude/longitude, a country, a city, a geographic feature (e.g., a building, a distance, a mountain, or facility), and the like.

The contactable time information includes information designating a time range based on a place where the external electronic device is located. The time range may be differently designated according to the place, such as a country, a city, a building, and the like, in the contactable time information. For example, the time range may be designated differently according to data (e.g., mean sunrise/sunset time and the like) used to calculate a time range of a country, or a city in the contactable time information. Moreover, for example, the time range may be designated differently according to a geographic feature (e.g., a library, a subterranean cave, and the like) where the external electronic device is located, in the contactable time information. The time range may be designated according to time information of a location where the external electronic device is located, or location information of the external electronic device in the contactable time information. For example, even though current time of a place where the external electronic device is located is contactable time, if the external electronic device is in a place where a telephone conversation is not easy, such as, for example, a library, the contactable time information may be processed as a non-contactable time when the external electronic device stays in the corresponding location.

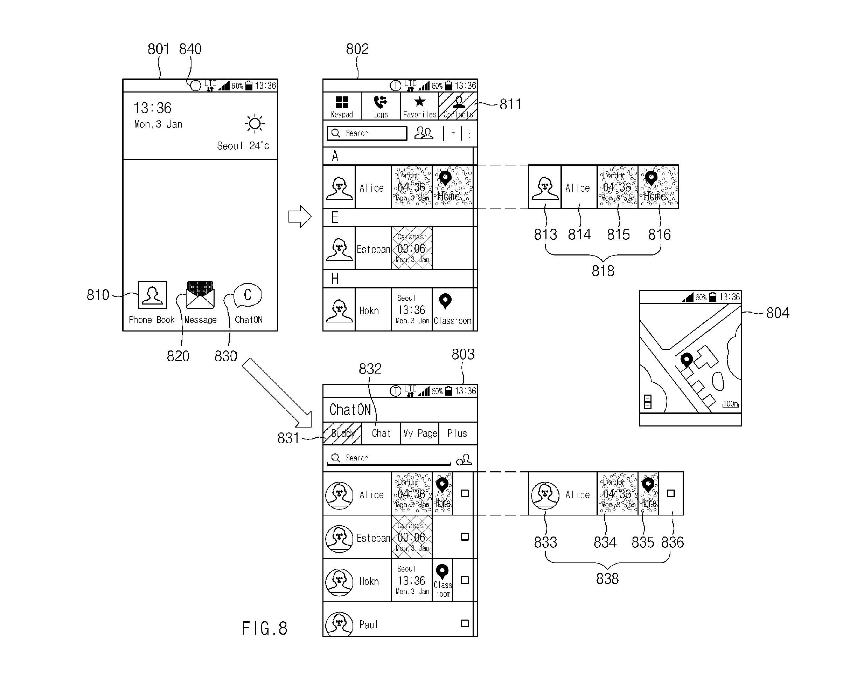

FIG. 8 is a diagram illustrating a list information display screen, according to an embodiment of the present disclosure.

Referring to FIG. 8, the display 160 displays a home screen 801 (or a standby screen, a specific function execution screen, and the like). For example, the display 160 displays one or more objects (e.g., a widget, an image (e.g., an icon), a button, and the like) connected to a function provided from the application 147. For example, the display 160 displays objects corresponding to a phonebook 810, an SMS/MMS 820, an IM 830, connected to a function provided from the application 147.

According to an embodiment of the present disclosure, the display 160 displays a display icon 840 indicating whether a time display function is selected. The display icon 840 may generate an input signal associated with a time display function On/Off in response to an operation of a user. Moreover, the display icon 840 may display a current time display function status (e.g., turn-on or turn-off).

According to an embodiment of the present disclosure, if the phonebook object 810 is selected by an input of a user, or a contacts page 811 for executing a function of the phonebook 810 is selected, a call request of an external electronic device information list may be transmitted to at least one of a processor 120 or an information processing module 180. Moreover, for example, if the IM 830 is selected, the display 160 outputs a screen including at least one sub-object such as, for example, a chat friend (buddy) list 831. If the chat friend (buddy) list 831 is selected, a call request of the external electronic device information list may be transmitted to at least one of the processor 120 or the information processing module 180. According to an embodiment of the present disclosure, if a call request of the external electronic device information list is received, the information processing module 180 may collect and process at least one of time information and location information of a location where an external electronic device connected through a communication interface 170 is located.

According to an embodiment of the present disclosure, in a screen 802, the display 160 displays an object including information of an external electronic device in response to selection of the phonebook 810 or the contacts page 811. An object 818 including the information of the external electronic device, which the display 160 displays, includes at least one of a user image 813 of an external electronic device, a text box 814 corresponding to a user name of an external electronic device, a text box 815 corresponding to information of a current time, a date, a day of the week, or a city name of the external electronic device, and a text box 816 including an object corresponding to a location display icon or time-based location information of the external electronic device.

According to an embodiment of the present disclosure, in screen 803, the display 160 displays an object 838 corresponding to information of the external electronic device, based on the selection of the chat friend (buddy) list 831. The object 838 includes at least one of a text box 833 including an object corresponding to a user image and an user name of the external electronic device, a text box 834 corresponding to information of a current time, a date, a day of the week, or a city name of the external electronic device, a text box 835 including an object corresponding to a location display icon or time-based location information of an external electronic device, or an external electronic device selection check box 836.

According to an embodiment of the present disclosure, the display 160 may display at least one of a shape or a color of the object (e.g., text boxes 815 and 834 corresponding to information of the current time, date, day of the week, or city name of the external electronic device, and text boxes 816 and 835 including an object corresponding to a location display icon or time-based location information of an external electronic device) corresponding to information of the external electronic device, in a different manner, based on an information collection time (e.g., collection time of time information, reception time of contents including location information) of the external electronic device.

In screen 804, the display 160 displays a map including location information of the external electronic device processed through the information processing module 180 in response to selection of an object (e.g., the text box 816 or the text box 835), in which a location display icon of the external electronic device is included, from among objects displayed in the display 160.

The information processing module 180 may control the display of a contact list, a chat friend list, or a chat room list, and the like, in response to an input of a user. The information processing module 180 may collect time information of at least one external electronic device from information of the external electronic device included in a list, when the list is outputted. The information processing module 180 may control the display of the collected time information in an area associated with a corresponding list item. The information processing module 180 may generate an object corresponding to the time information, and control the display of at least one of a display location, a shape, a transparency, or a color of the object, in a different manner, based on a collection time of the time information. With regard to the collection of the time information, after establishing a communication channel with an external electronic device through a communication interface, the information processing module 180 may query time information of the external electronic device to obtain the time information. Moreover, with regard to the collection of the time information, the information processing module 180 may receive contents, in which location information of the external electronic device is included, from a server device providing the same service as a social networking service (SNS), extract location information from the received content, and obtain time information of the external electronic device based on the extracted location information.

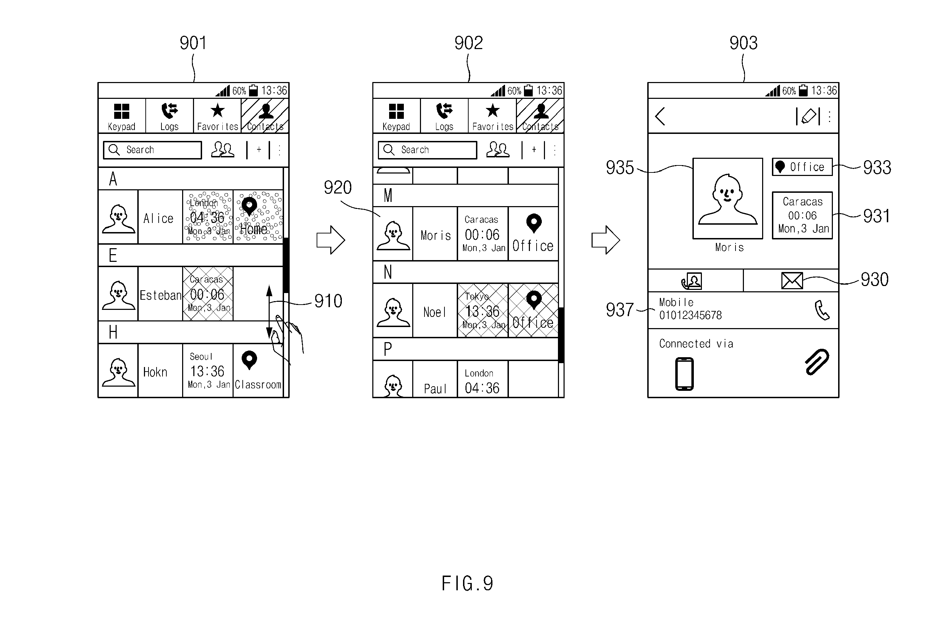

FIG. 9 is a diagram illustrating a list information display screen and an item information display screen, according to an embodiment of the present disclosure.

Referring to FIG. 9, as illustrated in screen 901, the display 160 displays an external electronic device information list based on an input event. Specifically, the display 160 displays at least a portion of the external electronic device information list. As illustrated in screen 902, if a scroll request of the external electronic device information list (e.g., an event 910) occurs, the information processing module 180 converts a screen displayed in the display 160 in response to event 910. For example, the information processing module 180 controls the display of other information of the external electronic device information list not displayed in the display 160 in response to the scroll operation. According to an embodiment of the present disclosure, the information processing module 180 controls the display of at least one of time information and location information, by collecting and processing at least one of the time information and the location information associated with specific items of the external electronic device information list in response to the stopping of the scroll operation.

According to an embodiment of the present disclosure, as illustrated in screen 903, if an event associated with the selection of an item (e.g., an item 920), which is included in the external electronic device information list, occurs, the information processing module 180 controls the display of an object corresponding to detailed information of the selected item. The object corresponding to the detailed information includes at least one of a box 935 including an object corresponding to a user image or a user name of an external electronic device, a box 937 including an object corresponding to a user telephone number of the external electronic device or a dialing icon, a box 931 corresponding to information of a current time, a date, a day of the week, or a city name of the external electronic device, and a box 933 including an object corresponding to a location display icon or a time-based location information of the external electronic device. Additionally or generally, the display 160 displays an object of a dialer connected to a function, which the application 147 provides together with an object corresponding to the detailed information of the external electronic device, or SMS/MMS writing 930, and the like.

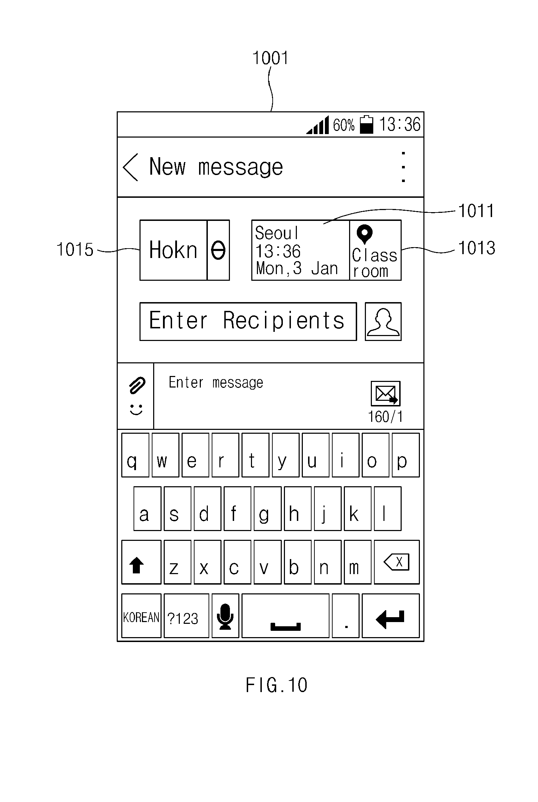

FIG. 10 is a diagram illustrating a message writing screen, according to an embodiment of the present disclosure.

Referring to FIG. 10, as illustrated in screen 1001, the information processing module 180 controls the output of an object corresponding to information of an external electronic device associated with a message function, based on the occurrence of a scheduled event or an input event. For example, the information processing module 180 controls the output of a screen 1001 in response to the occurrence of a call to open a new message writing window (e.g., the SMS/MMS writing 930), a call to open a message reception box (e.g., the SMS/MMS 820), or a call to open a message storage box. An object corresponding to information of an external electronic device may include at least one of a selection box 1015 corresponding to a user name of the external electronic device, a text box 1011 corresponding to information of a current time, a date, a day of the week, or a city name of an external electronic device, a box 1013 including an object corresponding to a location display icon or time-based location information of the external electronic device.

According to an embodiment of the present disclosure, as illustrated in the screen 903, if an event associated with selection of the object 930 occurs, the information processing module 180 may collect at least one of time information and location information of a location where the corresponding external electronic device is located. The information processing module 180 may control the output of at least one piece of collected information to the display 160. According to an embodiment of the present disclosure, an event associated with message writing, such as, for example, a letter input event, occurs, the information processing module 180 may control the removal of at least one of outputted boxes 1011 and 1013 from the display 160, and the extension of an output window for outputting an inputted letter.

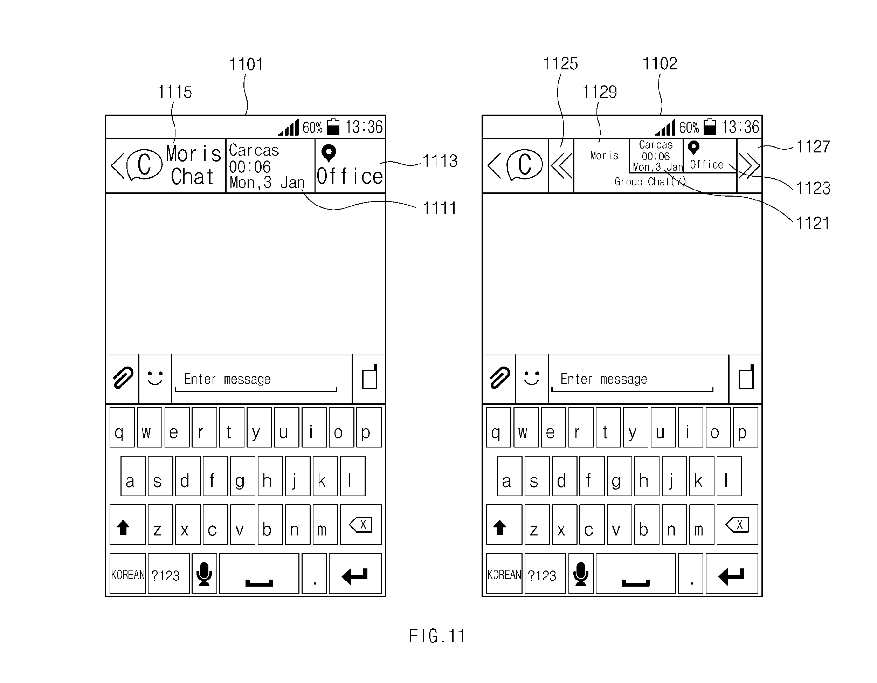

FIG. 11 is a diagram illustrating a chat function screen, according to an embodiment of the present disclosure.

Referring to FIG. 11, as illustrated in screen 1101, if a call request of a function, which is associated with a chat room, from among IM functions, occurs, the information processing module 180 controls the display of an object corresponding to information of the external electronic device. The call request of the function associated with the chat room may include a chat room opens (e.g., private chat room opens after selecting an item of a chat friend list) or a chat room entrance (e.g., private chat room entrance is displayed after selecting the chat page 832), and the like. Moreover, an object corresponding to information of an external electronic device may include at least one of a text box 1115 corresponding to a user name of the external electronic device, text box 1111 corresponding to information of a current time, a date, a day of the week, or a city name of the external electronic device, a box 1113 including an object corresponding to a location display icon or time-based location information of the external electronic device.

As illustrated in screen 1102, if a call request of a function, associated with a chat room, from among IM functions occurs, the information processing module 180 controls the display of an object corresponding to information of an external electronic device associated with a plurality of persons. For example, if a group chat room opens (e.g., after selecting the selection chat box 836 included in items of a chat friend list, a group chat room opens), a group chat room entrance is displayed (e.g., after selecting the chat page 832, a group chat room entrance is displayed), a message is transmitted/received in the chat room, or the like occurs, the information processing module 180 outputs an object, which corresponds to information of the external electronic device associated with a plurality of persons, to a constant area of a screen. The object corresponding to information of the external electronic device includes at least one of a text box 1129 corresponding to a user name of an external electronic device, a box 1121 corresponding to information of a current time, a date, a day of the week, or a city name of the external electronic device, a box 1123 including an object corresponding to a location display icon or time-based location information of the external electronic device, a previous item change arrow button 1125 associated with other external electronic devices assigned in a corresponding chat room, or a next item conversion arrow button 1127 associated with other external electronic devices assigned in a corresponding chat room. When the previous item change arrow button 1125 or the next item conversion arrow button 1127 is selected, the display 160 may convert information of the external electronic device connected to a chat room and may display the converted result.

According to an embodiment of the present disclosure, the display 160 may output text or an image inputted by the external electronic device to an output window. The information processing module 180 may output at least one of time information and location information so as to be adjacent to the displayed information (e.g., a text or an image, which is inputted, or information of a photograph, an image associated with an external electronic device, and the like) associated with a specific external electronic device.

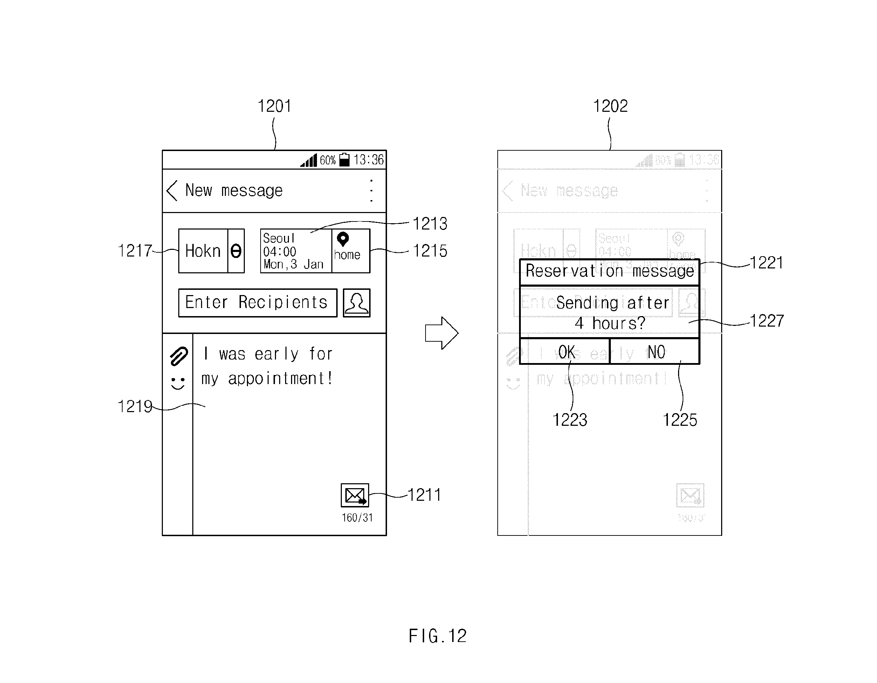

FIG. 12 is a diagram illustrating a screen associated with an information use method, according to an embodiment of the present disclosure.

Referring to FIG. 12, as illustrated in screen 1201, the display 160 outputs a new message writing window with regard to the use of a SMS/MMS function provided from the application 147. The new message writing window displays an object corresponding to information of an external electronic device, a message writing field 1219, or a message transmission button 1211. The object corresponding to information of the external electronic device may include at least one of a selection box 1217 corresponding to a user name of the external electronic device, a text box 1213 corresponding to information of a current time, a date, a day of the week or a city name of the external electronic device, a box 1215 including an object corresponding to a location display icon or time-based location information of the external electronic device.

When the message transmission button 1211 is selected, the information processing module 180 checks contactable time information of the external electronic device receiving a corresponding message. For example, as illustrated in screen 1201, a current time of the external electronic device is 04:00, and a time range corresponding to the contactable time information is from 08:00 to 21:15. The information processing module 180 determines that the current time of the external electronic device is not included in the time range corresponding to the contactable time information. If the current time of an external electronic device is included in the time range corresponding to the contactable time information, the information processing module 180 may transmit a written message to the external electronic device in response to a message transmission request.

According to an embodiment of the present disclosure, when the current time of the external electronic device is not included in the time range corresponding to the contactable time information, the information processing module 180 may register a reservation message to transmit a message at contactable time of the external electronic device. Alternatively, as illustrated in screen 1202, the information processing module 180 controls the display of a reservation message alarm popup 1221 for a reservation message transmission function. The reservation message alarm popup 1221 may include at least one of a notification text box 1227, a reservation message registration function button 1223, and a message instant transmission function button 1225. The notification text box includes an object corresponding to reservation transmission time information calculated based on current time of the external electronic device and contactable time information. When the button 1223 is selected, a written message may be registered as a reservation message. When time associated with a reservation message arrives, the information processing module 180 may automatically transmit a reservation message to the external electronic device. Alternatively, the information processing module 180 may output a confirmation window associated with the reservation message transmission when the time associated with a reservation message arrives, and transmit a reservation message when a confirmation input is provided.

According to an embodiment of the present disclosure, when the button 1225 is selected, the information processing module 180 outputs a sub-popup window including a transmission button and a transmission cancel button. When the transmission button is selected, the information processing module 180 may transmit a written message to an external electronic device. When the transmission cancel button is selected, the information processing module 180 may cancel transmission of the written message. The information processing module 180 may return to the screen 1201, to temporarily store a written message, or to terminate a message function.

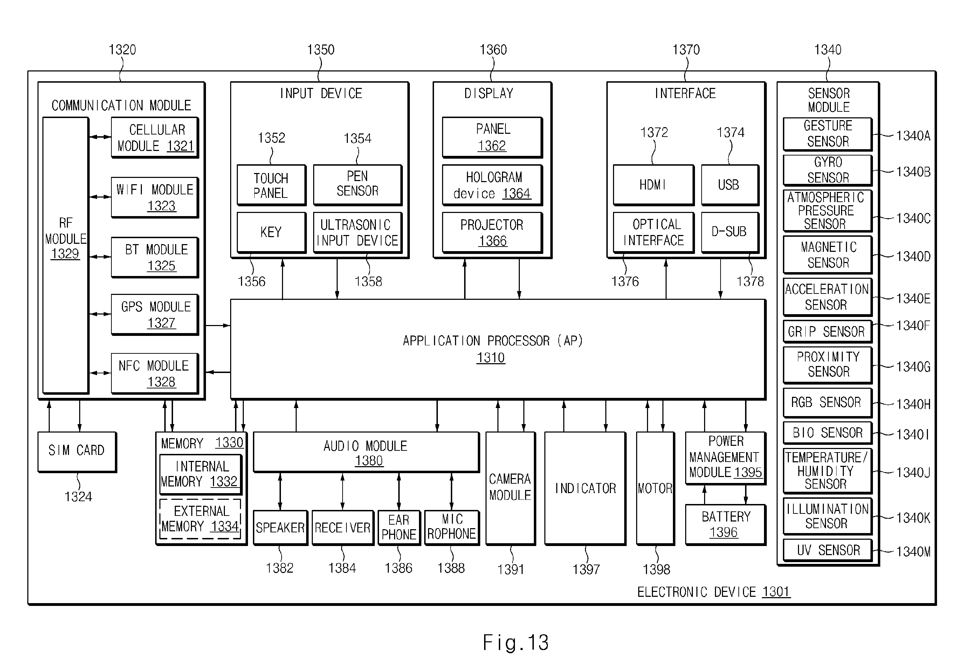

FIG. 13 is a block diagram illustrating an electronic device, according to an embodiment of the present disclosure.

Referring to FIG. 13, an electronic device 1301 may include all or a part of the electronic device 101 of FIG. 1. The electronic device 1301 includes one or more processors (e.g., an application processors (APs)) 1310, a communication module 1320, a subscriber identification module (SIM) card 1324, a memory 1330, a sensor module 1340, an input device 1350, a display 1360, an interface 1370, an audio module 1380, a camera module 1391, a power management module 1395, a battery 1396, an indicator 1397, and a motor 1398.

The processor 1310 may drive, for example, an operating system (OS) or an application to control a plurality of hardware or software components connected to the processor 1310, and may process and compute a variety of data including multimedia data. The processor 1310 may be implemented with a system on chip (SoC), for example. According to an embodiment of the present disclosure, the processor 1310 may further include a graphic processing unit (GPU) and/or an image signal processor. The communication module 1320 may include a part (e.g., a cellular module 1321) of components illustrated in FIG. 13. The processor 1310 may load instructions or data, received from at least one of other components (e.g., a nonvolatile memory), onto a volatile memory and may store various data at a nonvolatile memory.

The communication module 1320 may be configured to be the same as or similar to the communication interface 170 of FIG. 1. The communication module 1320 includes a cellular module 1321, a Wi-Fi module 1323, a Bluetooth (BT) module 1325, a GPS module 1327, a NFC module 1328, and a radio frequency (RF) module 1329.

The cellular module 1321 may provide voice communication, video communication, a character service, an Internet service, and the like through a communication network. According to an embodiment of the present disclosure, the cellular module 1321 may perform discrimination and authentication of the electronic device 1301 within a communication network using a subscriber identification module (e.g., the SIM card 1324). According to an embodiment of the present disclosure, the cellular module 1321 may execute at least a portion of functions that the processor 1310 provides. According to an embodiment of the present disclosure, the cellular module 1321 may include a communication processor (CP).

Each of the Wi-Fi module 1323, the BT module 1325, the GPS module 1327, and the NFC module 1328 may include a processor for processing data exchanged through a corresponding module, for example. According to an embodiment of the present disclosure, at least a portion (e.g., two or more components) of the cellular module 1321, the Wi-Fi module 1323, the BT module 1325, the GPS module 1327, and the NFC module 1328 may be included within one integrated circuit (IC) or IC package.

The RF module 1329 may transmit and receive data, for example, a communication signal (e.g., an RF signal). The RF module 1329 may include a transceiver, a power amplifier module (PAM), a frequency filter, low noise amplifier (LNA), an antenna, or the like. According to an embodiment of the present disclosure, at least one of the cellular module 1321, the Wi-Fi module 1323, the BT module 1325, the GPS module 1327, or the NFC module 1328 may transmit and receive an RF signal through a separate RF module.

The SIM card 1324 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 1330 (e.g., a memory 130) includes at least one of an internal memory 1332 and an external memory 1334. For example, the internal memory 1332 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 1334 may include a flash drive, for example, compact flash (CF), secure digital (SD), micro secure digital (Micro-SD), mini secure digital (Mini-SD), extreme digital (xD), a multimedia card (MMC), or a memory stick. The external memory 1334 may be functionally and/or physically connected to the electronic device 1301 through various interfaces.

The sensor module 1340 may measure a physical quantity or may detect an operation state of the electronic device 1301. The sensor module 1340 may convert the measured or detected information to an electric signal. Generally or additionally, the sensor module 1340 includes at least one of a gesture sensor 1340A, a gyro sensor 1340B, a barometric pressure sensor 1340C, a magnetic sensor 1340D, an acceleration sensor 1340E, a grip sensor 1340F, a proximity sensor 1340G, a color sensor 1340H (e.g., red, green, blue (RGB) sensor), a biometric sensor 1340I, a temperature/humidity sensor 1340J, an illuminance sensor 1340K, and an UV sensor 1340M. Additionally or generally, the sensor module 1340 may further include, for example, an E-nose sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, a fingerprint sensor, and the like. The sensor module 1340 may further include a control circuit for controlling one or more sensors included therein. According to an embodiment of the present disclosure, the electronic device 1301 may further include a processor that is a part of the processor 1310 or independent of the processor 1310 and is configured to control the sensor module 1340. The processor may control the sensor module 1340 when the processor 1310 remains at a sleep state.

The input device 1350 includes at least one of a touch panel 1352, a (digital) pen sensor 1354, a key 1356, and an ultrasonic input device 1358. The touch panel 1352 may use at least one of capacitive, resistive, infrared and ultrasonic detecting methods. Also, the touch panel 1352 may further include a control circuit. The touch panel 1352 may further include a tactile layer. In this case, the touch panel 1352 may provide a tactile reaction to a user.

The (digital) pen sensor 1354 may be a part of a touch panel or may include a separate sheet for recognition. The key 1356 may include, for example, a physical button, an optical key, a keypad, and the like. The ultrasonic input device 1358 may sense an ultrasonic wave generated from an input device through a microphone (e.g., a microphone 1388), and may check data corresponding to the sensed ultrasonic wave.

The display 1360 (e.g., the display 160) includes at least one of a panel 1362, a hologram device 1364, and a projector 1366. The panel 1362 may be configured to be the same as or similar to a display 160 illustrated in FIG. 1. The panel 1362 may be, for example, flexible, transparent or wearable. The panel 1362 and the touch panel 1352 may be integrated into a single module. The hologram device 1364 may display a stereoscopic image in a space using a light interference phenomenon. The projector 1366 may project light onto a screen so as to display an image. The screen may be arranged in the inside or the outside of the electronic device 1301. According to an embodiment of the present disclosure, the display 1360 may further include a control circuit for controlling the panel 1362, the hologram device 1364, or the projector 1366.

The interface 1370 includes, for example, at least one of a high-definition multimedia interface (HDMI) 1372, a universal serial bus (USB) 1374, an optical interface 1376, or a D-subminiature (D-sub) 1378. The interface 1370 may be included, for example, in a communication interface 170, illustrated in FIG. 1. Additionally or generally, the interface 1370 may include, for example, a mobile high definition link (MHL) interface, a SD card/multi-media card (MMC) interface, or an infrared data association (IrDA) standard interface.

The audio module 1380 may convert a sound and an electric signal in dual directions. At least a portion of the audio module 1380 may be included, for example, in the input/output interface 150 illustrated in FIG. 1. The audio module 1380 may process, for example, sound information that is input or output through a speaker 1382, a receiver 1384, an earphone 1386, or microphone 1388.

The camera module 1391 for shooting a still image or a video may include, for example, at least one image sensor (e.g., a front sensor or a rear sensor), a lens, an image signal processor (ISP), or a flash (e.g., an LED or a xenon lamp).

The power management module 1395 may manage, for example, power of the electronic device 1301. According to an embodiment of the present disclosure, a power management integrated circuit (PMIC), a charger IC, or a battery gauge may be included in the power management module 1395. The PMIC may have a wired charging method and/or a wireless charging method. The wireless charging method may include, for example, a magnetic resonance method, a magnetic induction method or an electromagnetic method, and may further include a coil loop, a resonant circuit, a rectifier, and the like. The battery gauge may measure, for example, a remaining capacity of the battery 1396 and a voltage, current, or temperature thereof while the battery is charged. The battery 1396 may include, for example, a rechargeable battery or a solar battery.

The indicator 1397 may display a specific state of the electronic device 1301 or a part thereof (e.g., the processor 1310), such as a booting state, a message state, a charging state, and the like. The motor 1398 may convert an electrical signal into a mechanical vibration and may generate vibration or a haptic effect. A processing device (e.g., a GPU) for supporting a mobile TV may be included in the electronic device 1301. The processing device for supporting a mobile TV may process media data according to the standards of digital multimedia broadcasting (DMB), digital video broadcasting (DVB), etc.

According to an embodiment of the present disclosure, each of the above-described elements may be configured with one or more components, and the names of the elements may be changed according to the type of the electronic device. According to an embodiment of the present disclosure, the electronic device may include at least one of the above-described elements, and some elements may be omitted or added. Furthermore, some of the elements of the electronic device, according to an embodiment of the present disclosure, may be combined with each other so as to form one entity, so that the functions of the elements may be performed in the same manner as before the combination.

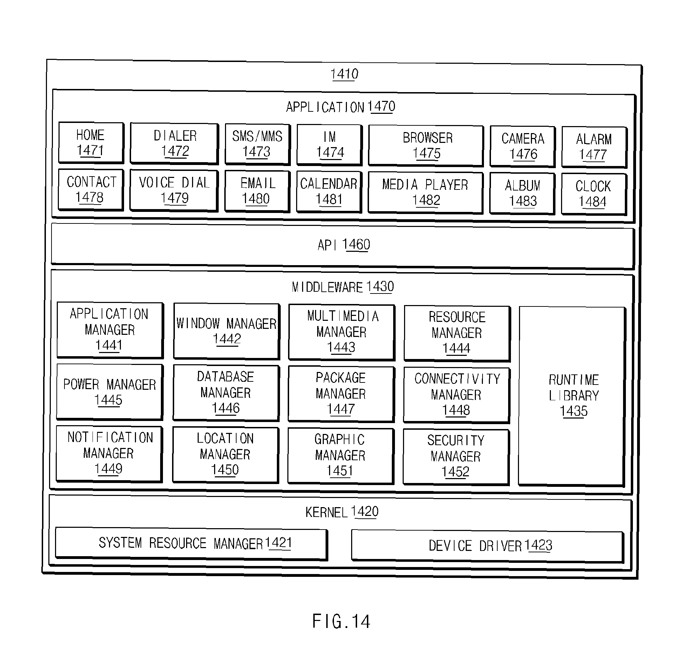

FIG. 14 is a block diagram illustrating of a program module, according to an embodiment of the present disclosure.

Referring to FIG. 14, according to an embodiment of the present disclosure, a program module 1410 (e.g., the program 140) includes an operating system (OS) to control resources associated with an electronic device (e.g., the electronic device 101), and/or diverse applications (e.g., the application program 147) driven on the OS.

The program module 1410 includes a kernel 1420, a middleware 1430, an API 1460, and an application 1470. At least a part of the program module 1410 may be preloaded on an electronic device or may be downloadable from an external electronic device (e.g., the first or second electronic device 102 or 104, or the server 106).

The kernel 1420 (e.g., the kernel 141) includes, for example, a system resource manager 1421 and a device driver 1423. The system resource manager 1421 may perform control, allocation, or retrieval of system resources. According to an embodiment of the present disclosure, the system resource manager 1421 includes a process managing part, a memory managing part, or a file system managing part. The device driver 1423 may include, for example, a display driver, a camera driver, a Bluetooth driver, a common memory driver, an USB driver, a keypad driver, a Wi-Fi driver, an audio driver, or an inter-process communication (IPC) driver.

The middleware 1430 may provide, for example, a function which the application 1470 needs in common, or may provide diverse functions to the application 1470 through the API 1460 to allow the application 1470 to efficiently use limited system resources of the electronic device. According to an embodiment of the present disclosure, the middleware 1430 (e.g., the middleware 143) includes at least one of a runtime library 1435, an application manager 1441, a window manager 1442, a multimedia manager 1443, a resource manager 1444, a power manager 1445, a database manager 1446, a package manager 1447, a connectivity manager 1448, a notification manager 1449, a location manager 1450, a graphic manager 1451, or a security manager 1452.

The runtime library 1435 may include, for example, a library module which is used by a compiler to add a new function through a programming language while the application 1470 is being executed. The runtime library 1435 may perform input/output management, memory management, or capacities about arithmetic functions.

The application manager 1441 may manage, for example, a life cycle of at least one application of the application 1470. The window manager 1442 may manage a GUI resource that is used in a screen. The multimedia manager 1443 may identify a format necessary for playing diverse media files, and may perform encoding or decoding of media files by using a codec suitable for the format. The resource manager 1444 may manage resources such as, for example, a storage space, a memory, or a source code of at least one application of the application 1470.

The power manager 1445 may operate, for example, with a basic input/output system (BIOS) to manage a battery or power, and may provide power information for an operation of an electronic device. The database manager 1446 may generate, search for, or modify database which is to be used in at least one application of the application 1470. The package manager 1447 may install or update an application which is distributed in the form of package file.

The connectivity manager 1448 may manage, for example, a wireless connection such as, for example, Wi-Fi or Bluetooth. The notification manager 1449 may display or notify an event such as arrival message, promise, or proximity notification in a mode that does not disturb a user. The location manager 1450 may manage location information of an electronic device. The graphic manager 1451 may manage a graphic effect that is provided to a user, or manage a user interface relevant thereto. The security manager 1452 may provide a general security function necessary for system security or user authentication. According to an embodiment of the present disclosure, when an electronic device (e.g., an electronic device 101) includes a telephony function, the middleware 1430 may further include a telephony manager for managing a voice or video call function of the electronic device.

The middleware 1430 may include a middleware module that combines diverse functions of the above-described components. The middleware 1430 may provide a module specialized to each type of OS to provide differentiated functions. Additionally, the middleware 1430 may remove a part of the preexisting components, dynamically, or may add a new component thereto.

The API 1460 (e.g., an API 145) may be, for example, a set of programming functions and may be provided with a configuration that is variable depending on an OS. For example, it may be permissible to provide one API set per platform. It may also be permissible to provide two or more API sets per platform.

The application 1470 (e.g., an application program 147) includes, for example, one or more applications capable of providing functions for a home 1471, a dialer 1472, an SMS/MMS 1473, an IM 1474, a browser 1475, a camera 1476, an alarm 1477, a contact 1478, a voice dial 1479, an e-mail 1480, a calendar 1481, a media player 1482, an album 1483, and a timepiece 1484, or for offering health care (e.g., measuring an exercise quantity or blood sugar) or environment information (e.g., atmospheric pressure, humidity, or temperature).

According to an embodiment of the present disclosure, the application 1470 may include an application (hereinafter "information exchanging application" for descriptive convenience) to support information exchange between the electronic device (e.g., an electronic device 101) and an external electronic device (e.g., the first or second external electronic device 102 or 104). The information exchanging application may include, for example, a notification relay application for transmitting specific information to the external electronic device, or a device management application for managing the external electronic device.

For example, the information exchanging application may include a function of transmitting notification information, which arises from other applications (e.g., applications for SMS/MMS, e-mail, health care, or environmental information), to an external electronic device 102 or 104. Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of the external electronic device 102 or 104, which communicates with the electronic device, an application running in the external electronic device, or a service (e.g., a call service or a message service) provided from the external electronic device.

According to an embodiment of the present disclosure, the application 1470 may include an application (e.g., a health care application of a mobile medical device), which is assigned in accordance with an attribute of the external electronic device 102 or 104. According to an embodiment of the present disclosure, the application 1470 may include an application that is received from an external electronic device (e.g., the server 106 or the first or second external electronic device 102 or 104). According to an embodiment of the present disclosure, the application 1470 may include a preloaded application or a third party application that is downloadable from a server. The component titles of the program module 1410, according to the embodiment of the present disclosure, may be modifiable depending on kinds of OSs.

According to an embodiment of the present disclosure, at least a part of the program module 1410 may be implemented in software, firmware, hardware, or a combination of at least two or more combinations thereof. At least a part of the program module 1410 may be implemented (e.g., executed), for example, by a processor (e.g., the processor 1310). At least a part of the program module 1410 may include, for example, a module, a routine, a set of instructions, or a process for performing one or more functions.

The term "module", as used herein, may represent, for example, a unit including one or more combinations of hardware, software and firmware. The term "module" may be interchangeably used with the terms "unit", "logic", "logical block", "component" and "circuit". A module may be a minimum unit of an integrated component or may be a part thereof. A module may be a minimum unit for performing one or more functions or a part thereof. A module may be implemented mechanically or electronically. For example, a module, according to various embodiments of the present disclosure, may include at least one of an application-specific IC (ASIC) chip, a field-programmable gate array (FPGA), and a programmable-logic device for performing some operations, which are known or will be developed.

According to various embodiments of the present disclosure, at least a portion of an apparatus (e.g., modules or functions thereof) or a method (e.g., operations) may be implemented by instructions stored in a computer-readable storage media in the form of a programmable module. The instruction, when executed by one or more processors (e.g., the processor 120), may execute a function corresponding to the instruction. The computer-readable storage media, for example, may be the memory 130.

A computer-readable recording medium may include a hard disk, a magnetic media such as a floppy disk and a magnetic tape, an optical media such as, for example, compact disc-ROM (CD-ROM) and a DVD (DVD), a magneto-optical media, such as a floptical disk, and the following hardware devices specifically configured to store and execute a program instruction (e.g., a programming module): ROM, RAM, and a flash memory. Also, a program instruction may include not only a mechanical code such as things generated by a compiler, but also a high-level language code executable on a computer using an interpreter. The above hardware unit may be configured to operate via one or more software modules for performing an operation of the present disclosure, and vice versa.

A module or a programming module, according to an embodiment of the present disclosure, may include at least one of the above elements, or a portion of the above elements may be omitted, or additional other elements may also be included. Operations performed by a module, a programming module, or other elements, according to an embodiment of the present disclosure, may be executed sequentially, in parallel, repeatedly, or in a heuristic method. Also, a portion of operations may be executed in different sequences, omitted, or other operations may be added.

According to various embodiments of the present disclosure, it may be possible to easily check time information of a location where an external electronic device is located, through an intuitive display.

Moreover, according to various embodiments of the present disclosure, it may be possible to provide accuracy of information and convenience of collection, by collecting time information of a location where an external electronic device is located, through a location confirm request.

Moreover, according to various embodiments of the present disclosure, it may be possible to precisely identify a status of a counterpart, by additionally collecting and displaying location information of an external electronic device.

While the disclosure has been shown and described with reference to certain embodiments thereof, it will be understood by those skilled in the art that various changes in form and detail may be made therein without departing from the scope of the disclosure as defined by the appended claims and including equivalents of features defined therein.

## Claims

1. An electronic device, comprising:
an information processing module configured to control a display to display contact information and time information corresponding to an external electronic device, in response to a request; and
the display configured to display the contact information and the time information.

2. The electronic device of claim 1, wherein the information processing module is further configured to:
obtain the time information from the external electronic device or a server device that manages the time information; or
obtain the time information from location information collected from the external electronic device or a server device that manages the location information.

3. The electronic device of claim 1 or 2, wherein the information processing module is further configured to:
extract location information of the external electronic device from contents received from a server device that manages contents transmitted from the external electronic device; and
obtain the time information based on the location information.

4. The electronic device of any one or more than one of the preceding claims, wherein the time information includes information of at least one of a time zone, a current time, a date, and a day of the week.

5. The electronic device of any one or more than one of the preceding claims, wherein a screen on the display comprises at least one of a contact list, a chat friend list, user profile information of the external electronic device, a function associated with a chat room, and a function associated with a message.

6. The electronic device of any one or more than one of the preceding claims, wherein the information processing module is further configured to:
determine contactable time information of the external electronic device based on the time information and a specific time range; or
determine the contactable time information based on at least one of the time information and a location information of the external electronic device.

7. The electronic device of claim 6, wherein the information processing module is further configured to generate and display an object corresponding to at least one of the time information, the location information, and the contactable time information.

8. The electronic device of claim 7, wherein the information processing module is further configured to determine at least one of a display location, a shape, a transparency, and a color of the object, in a different manner, based on an information collection time.

9. The electronic device of claim 6, 7 or 8, wherein the information processing module is further configured to transmit a message based on the contactable time information, when transmission of the message to the external electronic device is requested.

10. The electronic device of any one or more than one of the preceding claims, wherein the information processing module is further configured to generate an object corresponding to at least one of the time information and a location information of the external electronic device, and display the object in a specific location of a designated map.

11. A method of displaying time information corresponding a location where an external electronic device is located, the method comprising:
obtaining, by an electronic device, the time information of the external electronic device; and
displaying, by the electronic device, the time information and contact information corresponding to the external electronic device in response to a request.

12. The method of claim 11, wherein obtaining the time information comprises at least one of:
obtaining the time information from the external electronic device or a server device that manages the time information;
obtaining the time information from location information collected from the external electronic device or a server device that manages the location information; and
obtaining the time information based on location information extracted from contents received from a server device that manages contents transmitted from the external electronic device.

13. The method of claim 11 or 12, wherein displaying the contact information comprises:
determining information of at least one of a time zone, a current time, a date, or a day of the week of the external electronic device based on the time information; and
displaying the contact information and the time information on a screen comprising at least one of a contact list, a chat friend list, user profile information of the external electronic device, a function associated with a chat room, and a function associated with a message.

14. The method of claim 11, 12 or 13, wherein displaying the contact information comprises at least one of:
determining contactable time information of the external electronic device based on the time information and a designated time range or based on at least one of the time information and a location information of the external electronic device;
generating an object corresponding to at least one of the time information, the location information, and the contactable time information and displaying the object by determining at least one of a display location, a shape, a transparency, and a color of the object, in a different manner, based on an information collection time; and
transmitting a message based on the contactable time information, when transmission of the message to the external electronic device is requested.

15. The method of one or more than one of claims 11 - 14, wherein displaying the contact information comprises:
generating an object corresponding to at least one of the time information and a location information of the external electronic device; and
displaying the object in a specific location of a designated map.
